# EUROPEAN PATENT APPLICATION

(11) **EP 3 021 572 A1**
(43) Date of publication of application: **18.05.2016**
(21) Application number: 15192943.7
(22) Date of filing: 04.11.2015
(51) Int. Cl.: H04N 5/44, H04N 21/422, H04N 21/4402, H04N 21/442, G06F 3/0484, H04N 5/445

(54) **DISPLAY APPARATUS AND CONTROL METHOD THEREOF**

(30) Priority: 14.11.2014 KR 20140158511
(71) Applicant: Samsung Electronics Co., Ltd., Gyeonggi-do 16677 (KR)
(72) Inventor: BAEK, Ki-june, Seoul (KR)
(74) Representative: Appleyard Lees IP LLP

(57) **Abstract**

A display apparatus (100) including: an image inputter (110) configured to receive an image; a signal processor (120) configured to signal-process the received image; a display (130) configured to provide a screen image corresponding to the signal-processed image; and a processor (140) configured to control the display (130) to, in response to an event (S610) for determining a position of the screen image adjustment occurring on the screen image, to adjust (S620) the screen image based on the position determined according to the event, to control (S630) the signal processor to signal-process the received image based on a resolution corresponding to the adjusted screen image, and to control the display to display the image signal-processed based on the resolution corresponding to the adjusted screen image.

## Description

### BACKGROUND

### Field

Apparatuses and methods consistent with aspects of one or more exemplary embodiments relate to a display apparatus and a control method thereof, and more particularly, to a display apparatus and a control method thereof, for adjusting a screen image.

### Description of the Related Art

By virtue of the development of electronic technologies, various types of display apparatuses have been developed. In particular, display apparatuses such as a television (TV), a personal computer (PC), a lap top computer, a tablet PC, a cellular phone, an MP3 player, etc. have widespread use.

A function of adjusting a screen image to allow various functions may be provided.

However, in the related art, there is a problem in that an existing screen image adjusting function is restricted.

### SUMMARY

One or more exemplary embodiments overcome the above disadvantages and other disadvantages not described above. An exemplary embodiment is not required to overcome the disadvantages described above, and an exemplary embodiment may not overcome any of the problems described above.

An aspect of one or more exemplary embodiments provides a display apparatus and a control thereof, for changing a screen image in various ways according to user needs.

According to an aspect of an exemplary embodiment, there is provided a display apparatus including: an image inputter configured to receive an image; a signal processor configured to signal-process the received image; a display configured to provide a screen image corresponding to the signal-processed image; and a processor configured to control the display to, in response to an event for determining a position of the screen image adjustment occurring on the screen image, to adjust the screen image based on the position determined according to the event, to control the signal processor to signal-process the received image based on a resolution corresponding to the adjusted screen image, and to control the display to display the image signal-processed based on the resolution corresponding to the adjusted screen image.

The display may include a touch panel, and the processor may be further configured to, in response to a touch event for screen image adjustment occurring on the screen image, adjust the screen image based on a position in which the touch event occurs.

The processor may be further configured to, in response to the touch event occurring with respect to at least two points on the screen image, adjust the screen image to a polygonal shape, and at least one apex of the polygonal shape may correspond to a position of at least one of the at least two points.

The processor may be further configured to, in response to the touch event occurring with respect to at least two points on the screen image, adjust the screen image to a rectangular shape, a diagonal line of which corresponds to a line formed by connecting the two points.

The touch event may include at least one of a touch input event of a body part of a user and an attachment event of a conductive material.

The processor may be further configured to, in response to the event for determining a position of the screen image adjustment occurring, adjust the screen image based on the determined position only while the display apparatus operates in a preset screen image adjustment mode.

The display apparatus may further include a communicator configured to communicate with a remote controller.

The processor may be further configured to, in response to a signal for determining a position for the screen image adjustment being received from the remote controller, adjust the screen image based on the position determined according to the received signal.

The display apparatus may further include a detector configured to detect a position of a user.

The processor may be further configured to determine a viewing distance of a user based on the detected position of the user and adjust the screen image to correspond to the determined viewing distance.

The display apparatus may further include a storage configured to store information about a user interface (UI) image.

The processor may be further configured to, in response to an event for displaying the UI image occurring, control the display to display the UI image based on information about the UI image corresponding to a resolution corresponding to the adjusted screen image.

According to an aspect of an exemplary embodiment, there is provided a method of controlling a display apparatus including: displaying a screen image corresponding to a received image; adjusting, in response to an event for determining a position of the screen image adjustment occurring on the screen image, the screen image based on the position determined according to the event; processing the received image based on a resolution corresponding to the adjusted screen image; and displaying the processed image.

The display apparatus may include a touch panel, and the adjusting may include adjusting, in response to a touch event for screen image adjustment occurring on the screen image, the screen image based on a position in which the touch event occurs.

The adjusting may include adjusting, in response to the touch event occurring with respect to at least two points on the screen image, the screen image to a polygonal shape, and at least one apex of the polygonal shape may correspond to a position of at least one of the at least two points.

The adjusting may include adjusting, in response to a the event occurring with respect to at least two points on the screen image, the screen image to a rectangular shape, a diagonal line of which corresponds to a line formed by connecting the two points.

The touch event may include at least one of a touch input event of a body part of a user and an attachment event of a conductive material.

The adjusting of the screen image may include adjusting, in response to an event for determination of a position for screen image adjustment, the screen image based on the determined position only while the display apparatus operates in a preset screen image adjustment mode.

The adjusting of the screen image may include adjusting, in response to a signal for determining a position for the screen image adjustment being received from a remote controller, the screen image based on the position determined according to the received signal.

The method may further include detecting a user position.

The adjusting of the screen image may include: determining a viewing distance of a user based on the detected user position; and adjusting the screen image to correspond to the determined viewing distance.

The method may further include displaying, in response to an event for displaying a user interface (UI) image occurring, the UI image based on information about the UI image corresponding to a resolution corresponding to the screen image adjusted based on pre-stored information about the UI image.

According to an aspect of an exemplary embodiment, there is provided a display apparatus including: a display; and a processor configured to control the display to display an image on a screen image, to adjust, in response to an event for adjusting the screen image occurring on the screen image, the screen image based on a position determined corresponding to the event, to perform image processing on the image to correspond to the adjusted screen image, and to control the display to display the processed image on the adjusted screen image.

The controller may be further configured to adjust, in response to the event occurring on the screen image, at least one of a size, a position, and a shape of the screen image, and to perform image processing on the image to adjust at least one of a size, a position, and a shape of the image to correspond to the adjusted at least one size, position, and shape of the screen image.

The display may include a touch screen, and the processor may be further configured to control the display to display the screen image on the touch screen.

The event may include a touch input received on the touch screen, and the processor may be further configured to determine the position based on a position of the touch input on the touch screen.

The display apparatus may further include a receiver.

The event may include the receiver receiving position information corresponding to a position on the screen image, and the processor may be further configured to determine the position based on the received position information.

According to the aspects of various exemplary embodiments, a user may adjust a screen image to a desired size, in order to achieve an optimum viewing environment.

According to the present invention there is provided an apparatus and method as set forth in the appended claims. Other features of the invention will be apparent from the dependent claims, and the description which follows.

### BRIEF DESCRIPTION OF THE DRAWING

For a better understanding of the invention, and to show how embodiments of the same may be carried into effect, reference will now be made, by way of example, to the accompanying diagrammatic drawings in which:
FIG. 1 is a diagram of a display apparatus according to an exemplary embodiment;
FIG. 2A is a block diagram of display apparatus according to an exemplary embodiment;
FIG. 2B is a block diagram of the display apparatus according to an exemplary embodiment;
FIG. 3 is a diagram representing a configuration of software stored in a storage according to an exemplary embodiment.
FIGS. 4A to 5B are diagrams for explaining a method of adjusting a screen image according to various exemplary embodiments; and
FIG. 6 is a flowchart for explaining a method of controlling a display apparatus according to an exemplary embodiment.

### DETAILED DESCRIPTION OF THE EXEMPLARY EMBODIMENTS

Reference will now be made to one or more exemplary embodiments, examples of which are illustrated in the accompanying drawings.

Various modules and units described herein may be embodied as hardware, software, and a combination of hardware and software.

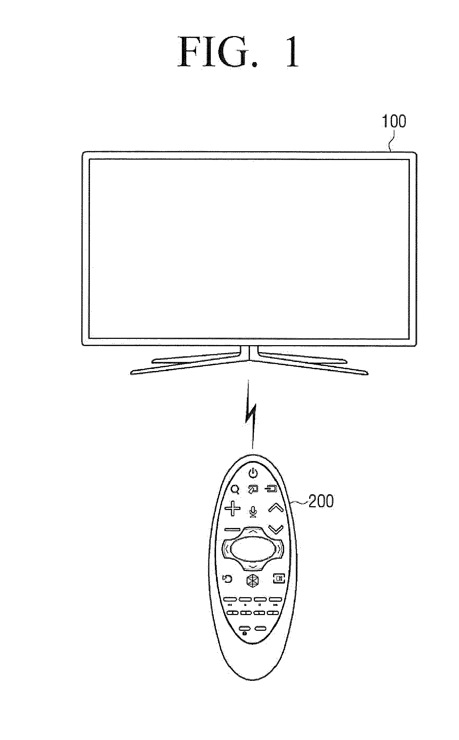

FIG. 1 is a diagram illustrating a configuration of a display apparatus 100 according to an exemplary embodiment.

The display apparatus 100 may be embodied as a digital television (TV), but this is only an example and the display apparatus 100 may be embodied as various types of display apparatuses, such as a TV, a monitor, a personal computer (PC), a kiosk, or the like.

The display apparatus 100 may be embodied to include a touch panel (or a touchscreen) for detecting various types of touch manipulations. For example, the display apparatus 100 may detect various types of touch manipulations such as touch manipulation with a hand, with a specific pen such as a stylus pen, and with a specific capacitive material.

The display apparatus 100 may be controlled by a remote controlling apparatus 200. The remote controlling apparatus 200 may detect a motion of the remote controlling apparatus 200 in an XYZ space and transmit a signal corresponding to the detected three-dimensional (3D) motion to the display apparatus 100. The remote controlling apparatus 200 may operate in a pointing mode for controlling a moving state of a pointer displayed on a user interface image (hereinafter, referred to as a UI image) provided through the display apparatus 100 according to a motion of the remote controlling apparatus 200. In this case, the remote controlling apparatus 200 may provide a pointing mode based on an absolute coordinate method of calculating an absolute movement or absolute position with respect to a preset reference point or a relative coordinate method of calculating a relative movement position with respect to a current position of the remote controlling apparatus 200. In addition, the remote controlling apparatus 200 may include a touchpad (or a touchscreen) for receiving a user touch interaction (a finger or a pen (e.g., a stylus pen)). The remote controlling apparatus 200 may be embodied to include a touch sensor for receiving various types of touch interactions or an optical joystick (OJ) to detect a movement and position of various objects. The remote controlling apparatus 200 may detect a touch interaction on a touchpad to generate a signal corresponding to the touch interaction and control the display apparatus 100 according to the corresponding signal.

The display apparatus 100 may adjust a screen image based on a touch event generated on the screen image, a pointing signal received from the remote controlling apparatus 200, a position designating signal on a touchpad included in the remote controlling apparatus 200, and so on. Hereinafter, various exemplary embodiments will be described in detail with reference to the attached diagrams. The display apparatus may adjust at least one of a size and position of the screen image based on the event.

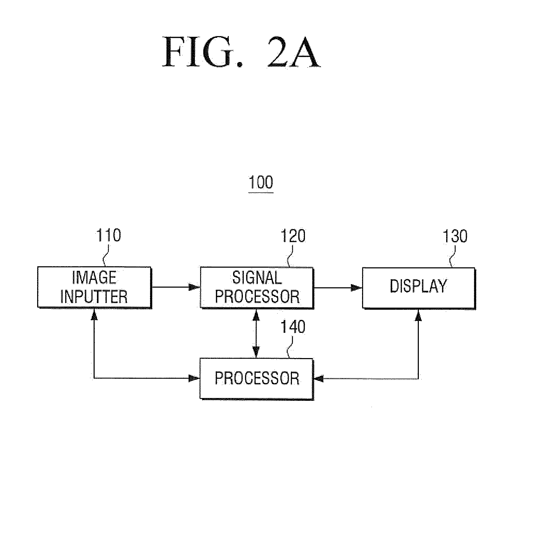

FIG. 2A is a block diagram of a display apparatus 100 according to an exemplary embodiment.

Referring to FIG. 2A, the display apparatus 100 includes an image inputter 110, i.e., an input/output (I/O) unit, an input unit, or a receiver, a signal processor 120, a display 130, i.e., a display unit, and a processor 140.

The image input unit 110 receives an image. The image input unit 110 may receive an image from various external devices such as an external storage medium, a broadcaster, a web server, etc. Here, the received image may be any one of a signal-view image, a stereo image, and a multi-view image.

The signal processor 120 performs various signal processing processes such as decoding, scaling, noise filtering, frame rate conversion, resolution conversion, etc. on the received image data. In general, an input content signal includes a video signal and an audio signal, and the input content signal may be divided into the video signal and the audio signal and the video signal and the audio signal may be processed separately.

In particular, the signal processor 120 may convert a resolution of the received image based on a control of the processor 140. Resolution refers to how many pixels are included in a surface of a screen. A pixel refers to a smallest element constituting a digital image. Resolution refers to the number of pixels occupying a specific distance or space, but not the number of all pixels. That is, resolution refers to an intensity of pixels. In general, in the case of a digital apparatus, resolution refers to the number of pixels present per one inch.

The signal processor 120 may convert a resolution of an output image according to various image processing schemes. For example, the signal processor 120 may select one pixel for every predetermine interval of all pixels of an input image and combine an image with low resolution using the selected pixels. For example, the case in which one pixel is selected for every three pixels will be described. When Pn-3, Pn, Pn+3,... are selected among pixels ..., Pn-3, Pn-2, Pn-1 Pn, Pn+1, Pn+2, Pn+3, ... of the input image to constitute a new converted image, pixels values of Pn-2, Pn-1, Pn+1, Pn+2 do not affect the converted image. As another example, one pixel of the converted image may be configured by selecting only one among sub-pixels included in each pixel of the input image and combining the selected sub-pixels. That is, when pixels of the input image are ..., Pn-3, Pn-2, Pn-1 Pn, Pn+1, Pn+2, Pn+3, ..., the converted image may be configured by selecting one among sub-pixels R, G, B included in each of the pixels and combining the selected sub-pixels. However, these are merely examples of various methods and various image conversion methods may be performed in various ways.

The display unit 130 provides a screen image of the signal-processed image. In addition, the display unit 130 may provide various types of UI images.

The display unit 130 may be embodied as various types of displays such as a liquid crystal display, an organic light-emitting diode, a flexible display, a three-dimension (3D) display, and so on.

The display unit 130 may be embodied in the form of a touchscreen with an interlayer structure including with a touchpad. The touchscreen may be configured to a touch input pressure, position, and area.

The processor 140 controls an overall function of the display apparatus 100.

In particular, in response to an event for determining a position for screen image adjustment occurring on a screen image, the processor 140 may adjust a screen image based on the position determined by the event. In addition, the processor 140 may control the display unit 130 to signal-process and display an input image based on a resolution corresponding to the adjusted screen image.

When the display unit 130 includes a touch panel, in response to a touch event for screen image adjustment occurring on a screen image, the processor 140 may adjust a screen image based on the position in which the touch event occurs. Here, the touch event may be at least one of a touch input event of a user and an attachment event of a conductive material.

For example, in response to a touch event of a user's hand for determining a position of screen image adjustment occurring in a preset screen image adjustment mode, the processor 140 may adjust a screen image based on the determined position according to the touch event.

As another example, in response to a touch event occurring according to attachment of a specific conductive material, the processor 140 may adjust a screen image based on the determined position according to the touch event. The conductive material may be configured to generate a type of static electricity or an amount of static electricity different from static electricity due to the user's touch such that the processor 140 differentiates the user touch from a meaningless touch event. Alternatively, the conductive material may communicate (using, for example, near-field communication (NFC)) with the processor 140 and transmit a specific signal or information such that the processor 140 recognizes that the conductive material is attached for screen image adjustment.

In response to a touch event occurring with respect to at least one point on a screen image, the processor 140 may adjust the screen image to a polygonal shape, at least one apex of which corresponds to the at least one point. For example, in response to a touch event occurring with respect to two points that are not disposed in a line parallel to an edge of the screen image, the processor 140 may adjust the screen image to a rectangular shape, a diagonal line of which is formed by connecting the two points. As another example, in response to a touch event occurring with respect to two points that are disposed parallel to a line to at least one side of both sides of a screen image, the processor 140 may adjust the screen image to a shape, a side of which is a line formed by connecting the two points. As another example, in response to a touch event occurring with respect to one point on a screen image, the processor 140 may adjust the screen image to a shape formed by connecting the corresponding point and two contact edges of edges of the screen image.

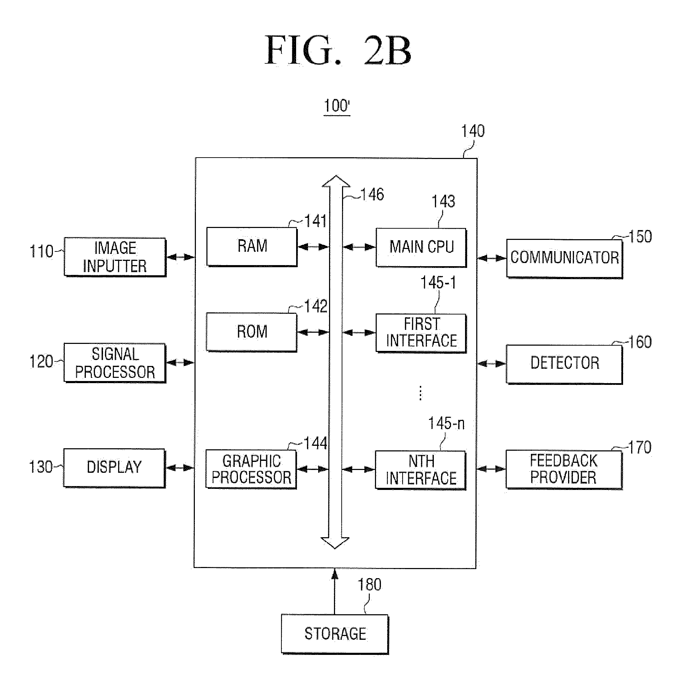

FIG. 2B is a block diagram of a display apparatus according to an exemplary embodiment. As shown in FIG. 2B, a display apparatus 100' includes a display 130, a processor 140, a storage 180, i.e., a storage unit, a communicator 160, i.e., a communication unit or a transceiver, and a feedback provider 170, i.e., a user interface.

The processor 140 controls an overall operation of the display apparatus 100' using various programs stored in the storage 180.

For example, the processor 140 may execute an application stored in the storage 180 to configure an execution image, display the execution image, and reproduce various content stored in the storage 180. In addition, the processor 140 may communicate with external devices through the communicator 160.

The processor 140 includes a random-access memory (RAM) 141, a read-only memory (ROM) 142, a main central processing unit (CPU) 143, a graphic processor 144, first to n^{th} interfaces 145-1 to 145-n, and a bus 146.

The RAM 141, the ROM 142, the main CPU 143, the graphic processor 144, the first to n^{th} interfaces 145-1 to 145-n, and so on may be connected through the bus 146.

The first to n^{th} interfaces 145-1 to 145-n are connected to the aforementioned various components. One of interfaces may be a network interface connected to an external device through a network.

The main CPU 143 accesses the storage 180 and performs booting using an operating system (O/S) stored in the storage 180. In addition, the main CPU 143 performs various operations using various programs, content, data, and so on, stored in the storage 180.

The ROM 142 stores a command set, and so on for system booting. In response to a turn-on command and power being received, the main CPU 143 copies the O/S stored in the storage 180 to the RAM 141 according to the command stored in the ROM 142 and executes the O/S to boot the system. Upon completing booting, the main CPU 143 copies various programs stored in the storage 180 to the RAM 141 and executes an application program copied to the RAM 141 to perform various operations.

The graphic processor 144 generates an image including various objects such as an icon, an image, a text, and so on using a calculator and a rendering unit, i.e., a renderer. The calculator calculates an attribute value such as a coordinate value, a shape, a size, a color, and so on for displaying objects according to a layout of an image using the control command received from the remote controlling apparatus 200. The rendering unit generates an image with various layouts based on the attribute value calculated by the calculator. The image generated by the rendering unit is displayed in a display region of the display unit 130.

The aforementioned operation of the processor 140 may be performed by the program stored in the storage 180. The storage 180 may store various data items such as an operating system (O/S) software module for driving the display apparatus 100', various applications, various data items input or set during application execution, and so on.

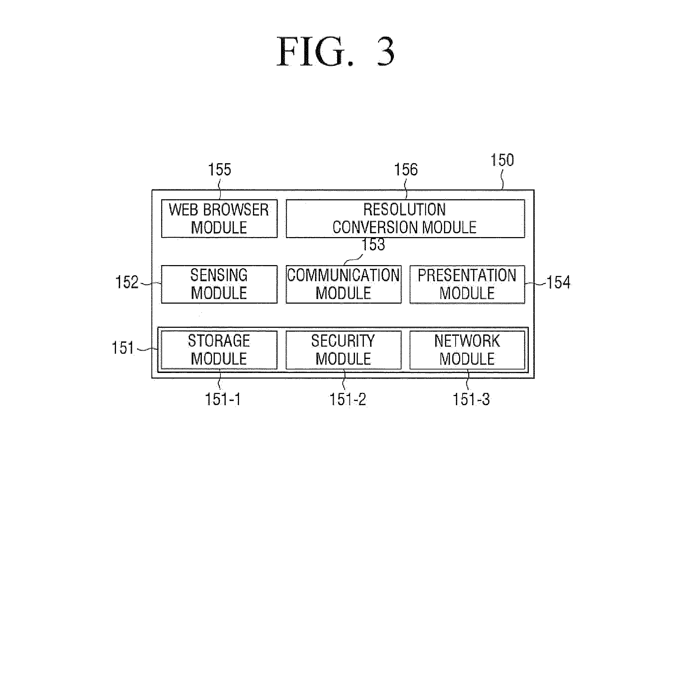

Other software modules stored in the storage 180 will be described below with reference to FIG. 3.

FIG. 3 is a diagram representing a configuration of software stored in the storage 180 according to an exemplary embodiment.

Referring to FIG. 3, the storage 180 may store software including a base module 151, a sensing module 152, a communication module 153, a presentation module 154, a web browser module 155, and a resolution conversion module 156.

The base module 151 refers to a basic module that processes a signal transmitted from respective hardware included in the display apparatus 100' and transmits the signal to a higher layer. The base module 151 includes a storage module 151-1, a security module 151-2, a network module 151-3, and so on. The storage module 151-1 refers to a program module for managing a database (DB) or a register. The main CPU 143 may access a database in the storage 180 using the storage module 151-1 to extract various data items. The secure module 151-2 refers to a program module for supporting certification for hardware, request permission, security storage, and so on, and the network module 151-3 includes a DNET module, a universal plug-and-play (UPnP) module, and so on for supporting network access.

The sensing module 152 is a module that collects information from various sensors and analyzes and manages the collected information. The sensing module 152 may include a touch recognition module, an NFC recognition module, a face recognition module, a voice recognition module, a motion recognition module, and so on.

The communication module 153 is a module for external communication. The communication module 153 may include a messaging module such as a messenger program, a short message service (SMS) & multimedia message service (MMS) program, and an e-mail program, and a telephone module including a voice-over internet protocol (VoIP) module.

The presentation module 154 is a module for configuring a display image. The presentation module 154 includes a multimedia module for reproducing and outputting multimedia content and a UI rendering module for performing UI and graphic processing. The multimedia module may include a player module, a camcorder module, a sound processing module, and so on. Accordingly, the multimedia module reproduces various multimedia content to generate and reproduce an image and sound. The UI rendering module may include an image compositor module for combining images, a coordinate combination module for combining coordinates on a screen image on which an image is to be displayed, an X11 module for receiving various events from hardware, and a 2D/3D UI toolkit for providing a tool for configuration of a 3D type UI.

The web browser module 155 refers to a module that performs web browsing to access a web server. The web browser module 155 may include various modules such as a web view module for configuration of a web page, a download agent module for performing downloading, a bookmark module, a Web kit module, and so on.

The resolution conversion module 156 includes a program module for performing resolution conversion for providing an image resolution corresponding to a changed screen image when the screen image is changed based on at least one point on a screen image sensed through the sensing module 152. The resolution conversion module 156 may include various resolution conversion program modules.

The storage 180 may store information about a preset UI image for respective resolution. In this case, the processor 140 may provide a UI image based on information about a UI image corresponding to a resolution of the adjusted screen image according to an event for displaying a preset UI image, for example, a specific menu on-screen display (OSD) image. In addition, as necessary, the processor 140 may provide a UI image such as an OSD image as a default size irrespective of the adjusted screen image.

The communicator 160 communicates with various types of external devices according to various types of communication methods. The communicator 160 includes various communication chips such as a wireless fidelity (Wi-Fi) chip, a Bluetooth chip, a wireless communication chip, and so on. The wireless communication chip refers to a chip for communication according to various communication standards such as IEEE, ZigBee, 3^{rd} generation (3G), 3^{rd} generation partnership project (3GPP), long term evolution (LTE), and so on.

In particular, the communicator 160 may communicate with the remote controlling apparatus 200.

In response to a signal for determining of a position for screen image adjustment being received from the remote controlling apparatus 200, the processor 140 may adjust the screen image based on a position determined according to the received signal. The signal received from the remote controlling apparatus 200 may be, but is not limited to, a type of pointing signal and may be various types of signals such as positional information and so on according to touch input received through the touch panel included in the remote controlling apparatus 200.

The detector 160 may detect various actions, such as touch, pressure, approach, and so on, with respect to the display apparatus 100'.

The detector 160 may include a touch sensor for detecting a touch. The touch sensor may be embodied as an electrostatic sensor or a resistive sensor. The electrostatic sensor detects micro-scale electricity changes when a surface of the display unit 130 is touched by a part of the human body to calculate a touch coordinate using dielectric substance coated on a surface of the display unit 130. The resistive sensor includes two electrode plates and detects a flow of current between the upper and lower plates of a touched point when a screen is touched by the user to calculate a touch coordinate. However, these are merely examples, and the touch sensor may be embodied in various forms.

In addition, the detector 160 may include a camera and detect a user motion or a user position with the camera.

The processor 140 may determine a viewing distance based on the user position detected by the detector 160 and adjust the screen image to correspond to the determined viewing distance. Alternatively, the processor 140 may adjust the screen image according to a user motion for determining of the screen image.

The feedback provider 170 provides various feedback according to a function of the display apparatus 100'.

The feedback provider 170 may provide haptic feedback for a touch event input to the screen image. Haptic feedback refers to a technology where force or shock is generated in the display apparatus 100' to feel user tactile sense and is also referred to as computer tactile technology.

In response to touch input for screen image adjustment being received, the feedback provider 170 may provide haptic feedback at a point through which the corresponding touch event is received on the screen image.

The feedback provider 170 may apply different vibration conditions (e.g., a vibration frequency, vibration intensity, a vibration waveform, and a vibration position) to provide various feedback according to a control of the processor 140. The feedback provider 170 may provide haptic feedback using a vibration sensor, but this is merely an example, and haptic feedback may be provided using, for example, a piezoelectric sensor. In addition, the feedback provider 170 may provide various feedback, such as sound feedback, graphic feedback, and so on, according to various events for determination of a position of screen image adjustment. For example, in response to touch input for screen image adjustment being received, the feedback provider 170 may provide graphic feedback for displaying a specific GUI to a point of the screen image through which the touch event is received.

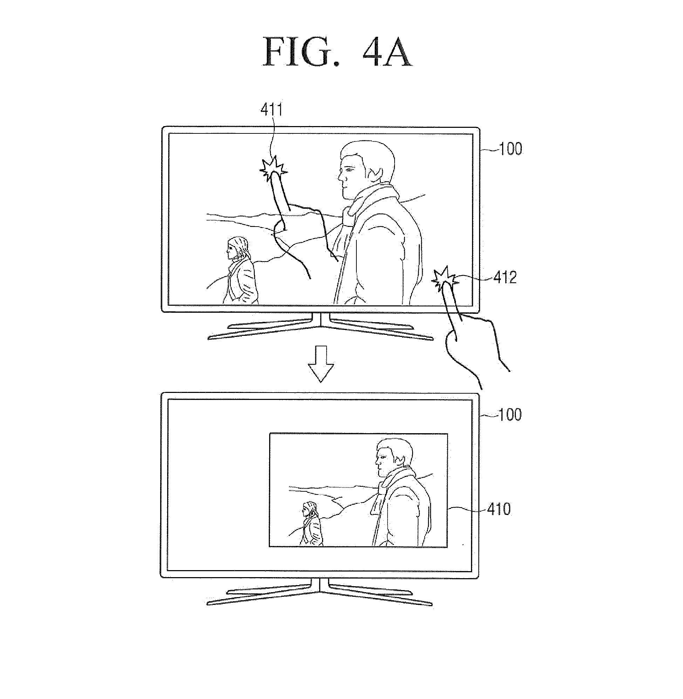

FIGS. 4A to 5B are diagrams illustrating a method of adjusting a screen image according to various exemplary embodiments.

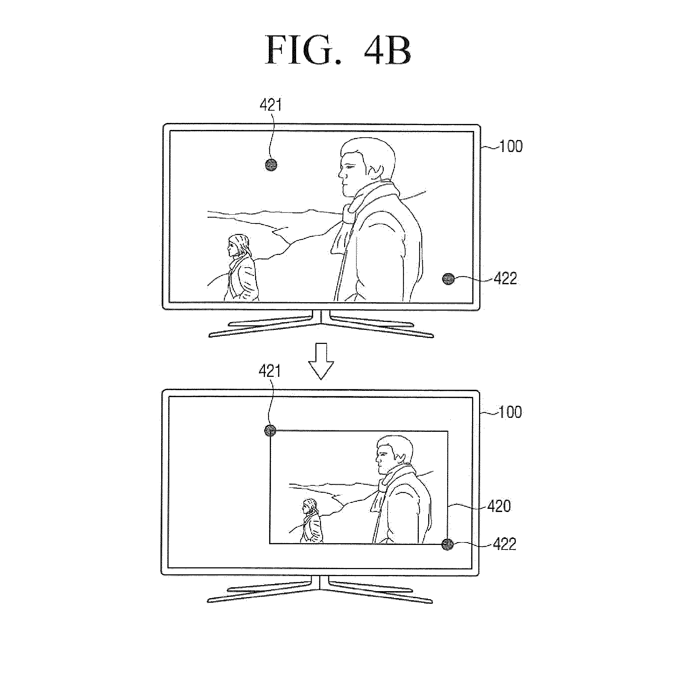

FIGS. 4A and 4B are diagrams illustrating a case in which the display apparatus 100 is configured to recognize touch.

Referring to FIG. 4A, in response to a user touch input for determining a position of a screen image for screen image adjustment being received, the screen image may be adjusted based on the position determined according to the touch input.

For example, in response to a touch event occurring with respect to at least two points on the screen image, in particular, two points 411 and 412 that are not disposed parallel to an edge of the screen image, the screen image may be adjusted to a rectangular shape, a diagonal line of which is a line formed by connecting the two points.

Then an image input may be signal-processed and may be provided to a screen image 410 with an adjusted size. In this case, the remaining region may be processed in various forms so as to prevent image viewing from being interrupted in the image with the adjusted size.

Referring to FIG. 4B, in response to a touch event for determination of a position for screen image adjustment occurring according to attachment of a specific conductive material, a screen image may be adjusted based on points 421 and 422 determined according to the touch event. In this case, an image input may be signal-processed corresponding to the adjusted screen image and provided to an image 420 with an adjusted size.

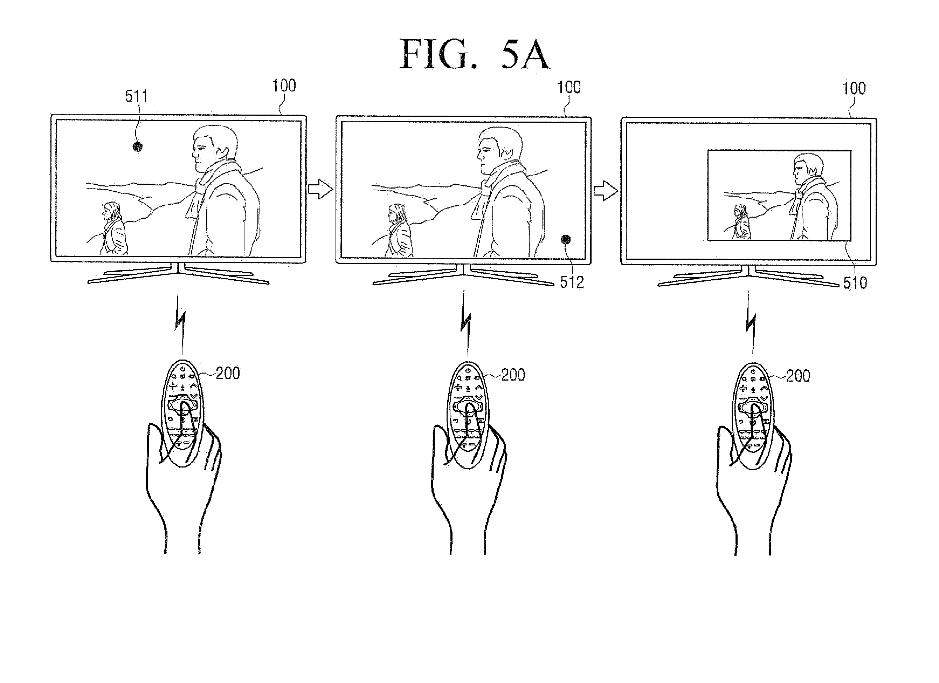

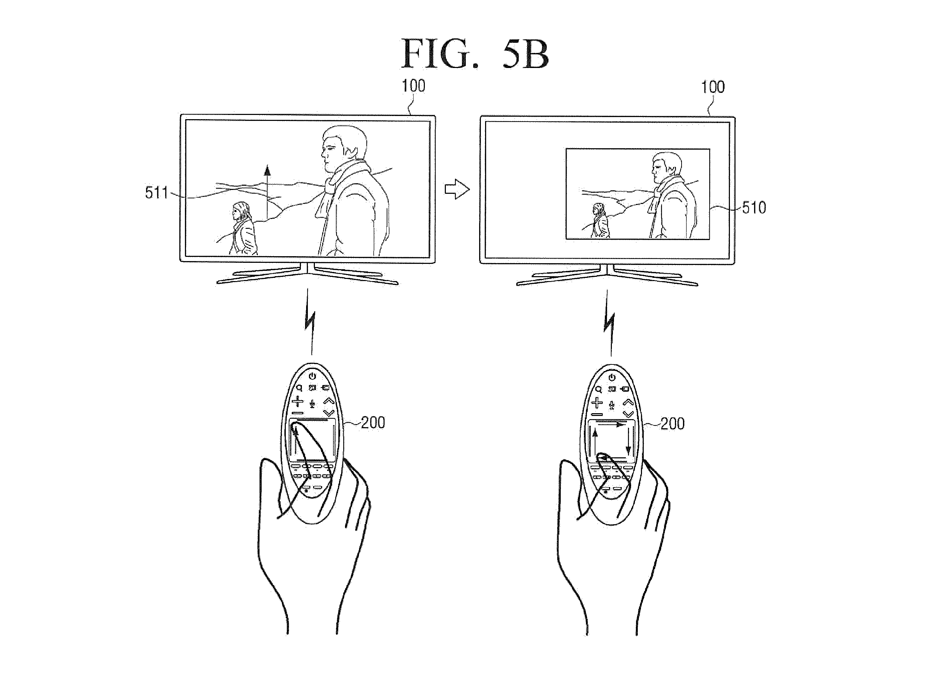

FIGS. 5A and 5B are diagrams illustrating a case in which the display apparatus 100 is controlled by the remote controlling apparatus 200, according to various exemplary embodiments.

Referring to FIG. 5A, in response to a pointing signal for determining a specific position for screen image adjustment being received on a screen image of the display apparatus 100 from the remote controlling apparatus 200, the image may be adjusted based on the position determined according to the received pointing signal. Referring to FIG. 5A, two points 511 and 512 that are not disposed in a line parallel to an edge of the screen image may be determined through the pointing signal. However, exemplary embodiments are not limited thereto, and the screen image and position may be determined, for example, according to a pointing signal for drawing an image with a rectangular shape to a desired position.

As shown in FIG. 5B, in response to touch input for determining a specific position for screen image adjustment on a touchpad 210 included in the remote controlling apparatus 200 being received, the remote controlling apparatus 200 may transmit the position determination signal corresponding to the touch input to the display apparatus 100 and adjust the screen image based on the signal received from the display apparatus 100.

In response to touch input for screen image adjustment being received on the touchpad 210 included in the remote controlling apparatus 200, a screen of the display apparatus 100 may display a guide line 511 for guidance of screen image adjustment according to the corresponding touch input. The screen image and position are determined according to a touch input for drawing an image with a rectangular shape of a desired position on the touchpad 210. However, this is merely an example, and the screen image may be adjusted according to the touch input for determination of an apex portion on the touchpad 210.

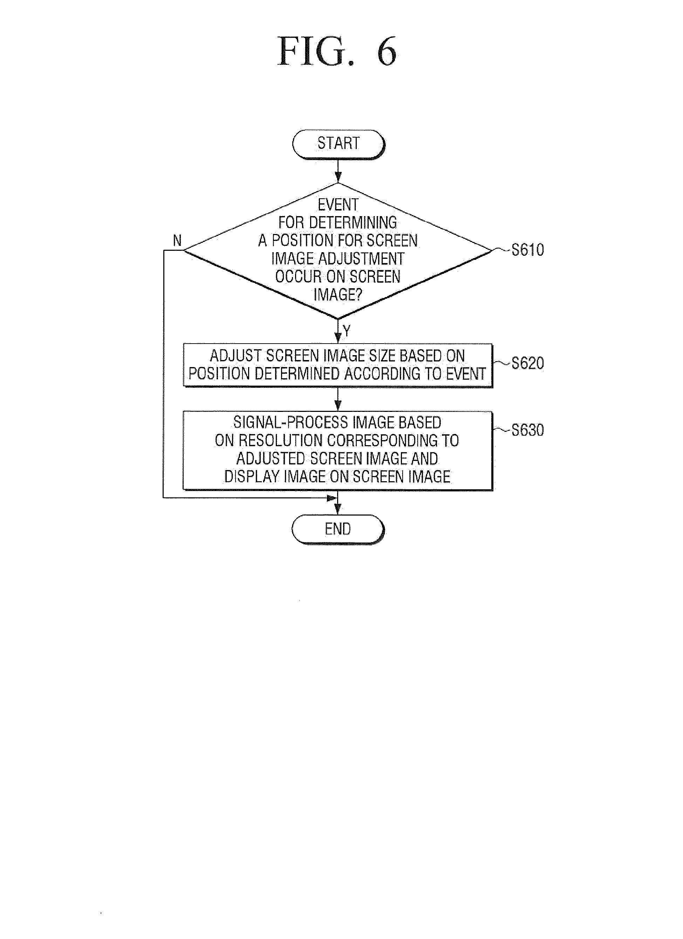

FIG. 6 is a flowchart of a method of controlling a display apparatus according to an exemplary embodiment.

In the method of controlling a display apparatus, in response to an event for determining a position for a screen image adjustment occurring on a screen image (S610), the screen image may be adjusted based on the position determined according to the event (S620).

Then an image input based on a resolution corresponding to the adjusted screen image is signal-processed and displayed on a screen image with an adjusted size (S630).

The display apparatus may include a touch panel, and in operation S620 for adjusting a screen image, in response to a touch event for screen image adjustment on a screen image, the display apparatus may adjust the screen image based on the position in which the touch event occurs.

In operation S620 for adjusting the screen image, in response to a touch event occurring with respect to at least two points on the screen image, the screen image may be adjusted to a polygonal shape, at least one apex of which corresponds to at least one of the at least two points.

In operation S620 for adjusting the screen image, in response to a touch event occurring with respect to at least two points on the screen image, the screen image may be adjusted to a rectangular shape, a diagonal line of which is a line formed by connecting the two points.

The touch event may be at least one of a touch input event of a user and an attachment event of a conductive material.

In operation S620 for adjusting the screen image, in response to a touch event for determining a position for screen image adjustment occurring in a preset screen image adjustment mode, the screen image may be adjusted based on the determined position.

In operation S620 for adjusting the screen image, in response to a signal for determining a position for screen image adjustment being received from a remote controller, the screen image may be adjusted based on the point determined according to the received signal.

The method of controlling a display apparatus may further include detecting a user position, and in operation S620 for adjusting the screen image, a viewing distance may be determined based on the detected user position and the screen image may be adjusted to correspond to the determined viewing distance.

The method of controlling a display apparatus may further include displaying a UI image corresponding to a resolution preset according to an event for displaying the preset UI image.

As described above, according to various exemplary embodiments, a user may adjust a screen image to a desired size, thereby achieving an optimum viewing environment. For example, when a TV size is large but a viewing distance is short, an optimum viewing environment may be established according to a viewing condition of viewing an image with lower size or resolution than the resolution of a TV panel.

The control method according to various exemplary embodiments may be embodied as a program and provided to a display apparatus.

For example, a non-transitory computer readable medium may be provided storing a program for, in response to an event for determination of a position of screen image adjustment occurring on a screen image, adjusting a screen image based on a position determined according to the event, and signal-processing an image input based on a resolution corresponding to the adjusted screen image and displaying the signal-processed image on the screen image.

The non-transitory computer readable media refers to a medium that semi-permanently stores data and is readable by a device instead of a medium that stores data for a short time period, such as a register, a cache, a memory, etc. The aforementioned programs may be stored and provided in the non-transitory computer readable media such as a compact disc (CD), a digital versatile disc (DVD), a hard disc, a blue ray disc, a universal serial bus (USB) drive, a memory card, a read-only memory (ROM), etc.

The foregoing exemplary embodiments and advantages are merely exemplary and are not to be construed as limiting. Also, the description of the exemplary embodiments is intended to be illustrative, and not to limit the scope of the claims and their equivalents, and many alternatives, modifications, and variations will be apparent to those skilled in the art.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus comprising:
an image inputter configured to receive an image;
a signal processor configured to signal-process the received image;
a display configured to provide a screen image corresponding to the signal-processed image; and
a processor configured to control the display to, in response to an event for determining a position of the screen image adjustment occurring on the screen image, to adjust the screen image based on the position determined according to the event, to control the signal processor to signal-process the received image based on a resolution corresponding to the adjusted screen image, and to control the display to display the image signal-processed based on the resolution corresponding to the adjusted screen image.

2. The display apparatus as claimed in claim 1, wherein the processor is further configured to, in response to the event for determining a position of the screen image adjustment occurring, adjust the screen image based on the determined position only while the display apparatus operates in a preset screen image adjustment mode.

3. The display apparatus as claimed in claim 1, further comprising a communicator configured to communicate with a remote controller,
wherein the processor is further configured to, in response to a signal for determining a position for the screen image adjustment being received from the remote controller, adjust the screen image based on the position determined according to the received signal.

4. The display apparatus as claimed in claim 1, further comprising a detector configured to detect a position of a user,
wherein the processor is further configured to determine a viewing distance of a user based on the detected position of the user and adjust the screen image to correspond to the determined viewing distance.

5. The display apparatus as claimed in claim 1, further comprising a storage configured to store information about a user interface (UI) image,
wherein the processor is further configured to, in response to an event for displaying the UI image occurring, control the display to display the UI image based on information about the UI image corresponding to a resolution corresponding to the adjusted screen image.

6. The display apparatus as claimed in any preceding claim, wherein:
the display comprises a touch panel, and
the processor is further configured to, in response to a touch event for screen image adjustment occurring on the screen image, adjust the screen image based on a position in which the touch event occurs.

7. The display apparatus as claimed in claim 6, wherein
the processor is further configured to, in response to the touch event occurring with respect to at least two points on the screen image, adjust the screen image to a polygonal shape, and
at least one apex of the polygonal shape corresponds to a position of at least one of the at least two points.

8. The display apparatus as claimed in claim 6 or 7, wherein the processor is further configured to, in response to the touch event occurring with respect to at least two points on the screen image, adjust the screen image to a rectangular shape, a diagonal line of which corresponds to a line formed by connecting the two points.

9. The display apparatus as claimed in any one of claims 6 to 8, wherein the touch event comprises at least one of a touch input event of a body part of a user and an attachment event of a conductive material.

10. A method of controlling a display apparatus, the method comprising:
displaying a screen image corresponding to a received image;
adjusting, in response to an event for determining a position of the screen image adjustment occurring on the screen image, the screen image based on the position determined according to the event;
processing the received image based on a resolution corresponding to the adjusted screen image; and
displaying the processed image.

11. The method as claimed in claim 10, wherein the adjusting of the screen image comprises adjusting, in response to an event for determination of a position for screen image adjustment, the screen image based on the determined position only while the display apparatus operates in a preset screen image adjustment mode.

12. The method as claimed in claim 10 or 11, wherein:
the display apparatus comprises a touch panel, and
the adjusting comprises adjusting, in response to a touch event for screen image adjustment occurring on the screen image, the screen image based on a position in which the touch event occurs.

13. The method as claimed in claim 12, wherein
the adjusting comprises adjusting, in response to the touch event occurring with respect to at least two points on the screen image, the screen image to a polygonal shape, and
at least one apex of the polygonal shape corresponds to a position of at least one of the at least two points.

14. The method as claimed in claim 12 or 13, wherein the adjusting comprises adjusting, in response to the touch event occurring with respect to at least two points on the screen image, the screen image to a rectangular shape, a diagonal line of which corresponds to a line formed by connecting the two points.

15. The method as claimed in any one of claims 12 to 14, wherein the touch event comprises at least one of a touch input event of a body part of a user and an attachment event of a conductive material.
